# EUROPÄISCHE PATENTSCHRIFT

(11) **EP 3 685 289 B1**
(45) Veröffentlichungstag und Bekanntmachung des Hinweises auf die Patenterteilung: **21.07.2021**
(21) Anmeldenummer: 18753411.0
(22) Anmeldetag: 13.08.2018
(51) Int. Cl.: G06Q 20/40, H04L 29/06, G06F 21/32

(54) **VERFAHREN ZUR ÜBERPRÜFUNG DER IDENTITÄT EINER PERSON UND BEREITSTELLUNG VON DAMIT VERKNÜPFTEN NUTZERDATEN**
METHOD FOR VERIFYING THE IDENTITY OF A PERSON AND PROVIDING USER DATA LINKED THERETO
PROCÉDÉ POUR LA VÉRIFICATION DE L'IDENTITÉ D'UNE PERSONNE ET LA FOURNITURE DE DONNÉES D'UTILISATEUR QUI Y SONT ASSOCIÉES

(30) Priorität: 21.09.2017 AT 21017 U
(43) Veröffentlichungstag der Anmeldung: 29.07.2020
(73) Patentinhaber: Eazy Connect Ltd., London EC1V 2NX (GB)
(72) Erfinder: HÖLLER, Bernhard, 1100 Wien (AT)
(74) Vertreter: Patentanwaltskanzlei Matschnig & Forsthuber OG
(86) Internationale Anmeldenummer: PCT/EP2018/071856
(87) Internationale Veröffentlichungsnummer: WO 2019/057395

(56) Entgegenhaltungen:
- WO-A1-2013/051019
- US-A1- 2013 215 275
- US-A1- 2016 063 235
- US-B1- 9 189 788

## Beschreibung

Die Erfindung betrifft ein Verfahren zur Überprüfung der Identität einer Person und Bereitstellung von damit verknüpften Nutzerdaten.

Üblicherweise ist bei einer bargeldlosen Bezahlung in einem Geschäft eine Bankomatkarte im Scheckkartenformat notwendig, wobei sich die zu bezahlende Person überdies eine PIN-Nummer merken muss, die mit der Bankomatkarte verknüpft ist und bei der Bezahlung zur Verifikation in ein dafür vorgesehenes Gerät eingetippt werden muss.

Abseits der bargeldlosen Bezahlung gibt es auch andere Gelegenheiten, die eine Verifikation mittels einer Karte im Scheckkartenformat vorsehen. Dokumente US2013/215275A1, WO2013/051019A1, US9189788B1, US2016/063235A1 sind relevant für das hier behandelte Problem.

Ein Nachteil dieser Methode ist, dass die für die jeweilige Situation benötigte Karte von der jeweiligen Person mitgeführt werden muss und/oder seitens der Person zusätzlich ein Passwort z.B. in Form einer Zahlenkombination gemerkt werden muss.

Es ist eine Aufgabe der Erfindung ein verbessertes Verfahren zur kartenlosen Überprüfung der Identität einer Person und Bereitstellung von damit verknüpften Nutzerdaten bereitzustellen. Die Erfindung ist durch die anhängenden Ansprüche definiert.

Diese Aufgabe wird dadurch gelöst, dass das Verfahren folgende Schritte aufweist, wobei zum Anlegen eines zur Überprüfung vorgesehenen Datensatzes einer Person folgende Schritte durchgeführt werden:
a) Erfassen zumindest eines biometrischen Merkmals der Person mit Hilfe eines dafür vorgesehenen Scanners,
b) Speichern des aus Schritt a) erfassten biometrischen Merkmals als biometrisches Referenzmerkmal in einer Speicherzentrale,
c) Verknüpfen des zumindest einen biometrischen Referenzmerkmals mit einem Nutzerdatensatz einer externen Einrichtung, beispielsweise eines Bankinstituts,
und wobei zur Überprüfung der Identität der Person und Bereitstellung von damit verknüpften Nutzerdaten, folgende Schritte durchgeführt werden:
d) Erfassen des zumindest einen biometrischen Merkmals mittels einer dafür vorgesehenen Scanvorrichtung,
e) Auslesen des biometrischen Referenzmerkmals aus der Speicherzentrale und anschließendes Vergleichen des erfassten biometrischen Merkmals aus Schritt d) mit dem biometrischen Referenzmerkmal, und
f) im Falle einer Übereinstimmung des Referenzmerkmals mit dem aus Schritt d) erfassten biometrischen Merkmal, Abrufen und Bereitstellen des mit dem biometrischen Referenzmerkmal verknüpften Nutzerdatensatzes der externen Einrichtung.

Anhand des zumindest einen biometrischen Merkmals, beispielsweise ein Fingerabdruck der Person, kann ein Nutzerprofil der Person auf der Speicherzentrale erstellt werden, wobei das erfasste biometrische Merkmal als biometrisches Referenzmerkmal mit diesem Nutzerprofil verknüpft und abgespeichert werden kann.

In dem erstellen Nutzerprofil kann anschließend das zumindest eine biometrische Merkmal der Person mit einem Nutzerdatensatz einer externen Einrichtung verknüpft werden.

Bei einem späteren Erfassen des zumindest gleichen biometrischen Merkmals, durch eine Scanvorrichtung, wird anschließend das zuvor gespeicherte biometrische Referenzmaterial aus der Speicherzentrale ausgelesen und mit dem durch die Scanvorrichtung erfassten biometrischen Merkmal verglichen.

Bei einer Übereinstimmung der Merkmale werden die zuvor mit dem biometrischen Referenzmaterial verknüpften Nutzerdatensätze der externen Einrichtung abgerufen und stehen zur weiteren Verwendung zur Verfügung.

Es kann auch vorgesehen sein, dass zwei oder mehrere biometrische Merkmale erfasst werden und in der Speicherzentrale abgespeichert werden, wobei jedem biometrischen Merkmal eine externe Einrichtung mit entsprechendem Nutzerdatensatz der Person zugewiesen bzw. mit diesem verknüpft werden kann.

Ferner kann vorgesehen sein, dass Kombinationen von Fingerabdrücken, beispielsweise der Fingerabdruck des Zeigefinger sowie des Mittelfingers, eine externen Einrichtung zugewiesen werden kann.

Mit Vorteil kann vorgesehen sein, wenn vor oder nach Schritt a) eine Bildaufnahme des Gesichts der Person mittels einer ersten Bildkamera erstellt wird und in Schritt b) zusammen mit dem Referenzmerkmal in der Speicherzentrale abgelegt wird.

Dieser Vorgang bringt das Referenzmerkmal mit der Gesichtsidentifikation der Person anhand einer Bildaufnahme in Verbindung, sodass als Sicherheitsmaßnahme jederzeit das durch die Scanvorrichtung erfasste biometrische Merkmal nicht nur mit dem Referenzmerkmal abgeglichen werden kann, sondern auch die Person, deren biometrisches Merkmal erfasst wird, zusätzlich anhand der gespeicherten Bildaufnahme verifiziert werden kann.

Ebenso kann es vorteilhaft sein, wenn während Schritt a) zumindest eine Bildaufnahme des Vorgangs aus Schritt a) mittels einer zweiten Bildkamera erstellt wird und in Schritt b) zusammen mit dem Referenzmerkmal in der Speicherzentrale abgelegt wird.

Es kann hierbei auch günstig sein, wenn mehrere Bildaufnahmen erstellt werden und die mehreren Bildaufnahmen in Schritt b) zusammen mit dem zumindest einen Referenzmerkmal in der Speicherzentrale abgelegt werden.

Vorzugsweise kann auch eine Filmaufnahme des Vorgangs in Schritt a) erstellt werden.

Dies sind weitere Sicherheitsmaßnahme, die sicherstellen sollen, dass die Gesichtsidentifikation während des Vorgangs des Erfassens des biometrischen Merkmals der Person anhand der erstellten Bildaufnahme und/oder der Filmaufnahmen gewährleistet ist.

Es kann vorteilhaft sein, wenn das zumindest eine biometrische Merkmal ein Fingerabdruck der Person ist.

Es kann auch vorgesehen sein, dass mehrere oder alle vorhandenen Fingerabdrücke der Person ermittelt bzw. erfasst werden.

Mit Vorteil kann vorgesehen sein, in Schritt a) beide Handflächen der Person, welche Handflächen jeweils bis zu acht unterschiedliche biometrische Merkmale aufweisen, mit Hilfe des Scanners erfasst werden.

Die Erfassung der kompletten Handfläche erhöht den Identifikationsgrad und damit auch die Sicherheit des Verfahrens um ein Vielfaches.

So kann beispielsweise vorgesehen sein, dass bei einer Personenkontrolle an einem Flughafen beide Handflächen auf eine dafür vorgesehene Scanvorrichtung aufgelegt und erfasst, wobei die auf den Handflächen vorhandenen biometrischen Merkmale, die zuvor als Referenzmerkmale abgespeichert wurden, wie zuvor beschrieben, überprüft bzw. verglichen werden. Zusätzlich kann vorgesehen sein, dass die zuvor durch die erste und/oder zweite Bildkamera getätigten Bildaufnahmen, die während des Schritts a) erfasst wurden, abgerufen werden und zur eindeutigen Identifikation der Person beitragen, da sowohl die von der Scanvorrichtung erfassten Handflächen verglichen als auch die zugehörige Gesichtsaufnahme bei Übereinstimmung angezeigt werden.

Die Anzahl der verknüpfbaren externen Einrichtungen bzw. Bankinstituten ist nur durch die Anzahl der erfassbaren, biometrischen Merkmale einer Person begrenzt.

Nach der Zuteilung der Bankinstitute kann die Person kartenlos die verschiedenen Bankinstitute beispielsweise.

In einer praxisgerechten Ausführungsform kann vorgesehen sein, dass die Scanvorrichtung aus Schritt d) eine mobile Scanvorrichtung ist, wobei die Scanvorrichtung mit der Speicherzentrale mittels einer Internetverbindung verbunden ist.

Weiters kann vorgesehen sein, dass zwischen zumindest zwei Benutzers der Nutzerdatensatz zumindest einer der Benutzer als Voice-Datei übermittelt wird. Beispielsweise wird bei einer telefonischen Verbindung zwischen Smartphones der jeweiligen Benutzer, welches Smartphone als oben beschriebene Scanvorrichtung fungiert, auf Wunsch eines Benutzers der angelegte Nutzerdatensatz als Voice-Datei auf das Smartphone des jeweils anderen Benutzers übertragen.

Nachfolgend wird die Erfindung anhand von beispielhaften Zeichnungen näher erläutert. Hierbei zeigt
Fig. 1 eine schematische Darstellung eines beispielhaften Verfahrens, wobei ein Fingerabdruck als biometrisches Referenzmerkmal erfasst, in einer Speicherzentrale abgelegt und mit einer externen Einrichtung verknüpft wird,
Fig. 2 ein weiteres Beispiel, wobei mehrere Fingerabdrücke erfasst werden,
Fig. 3 ein weiteres Beispiel, wobei über ein Zahlungsportal auf die Speicherzentrale zugegriffen wird, und
Fig. 4 eine Darstellung einer beispielhaften Handfläche mit acht erfassbaren biometrischen Merkmalen.

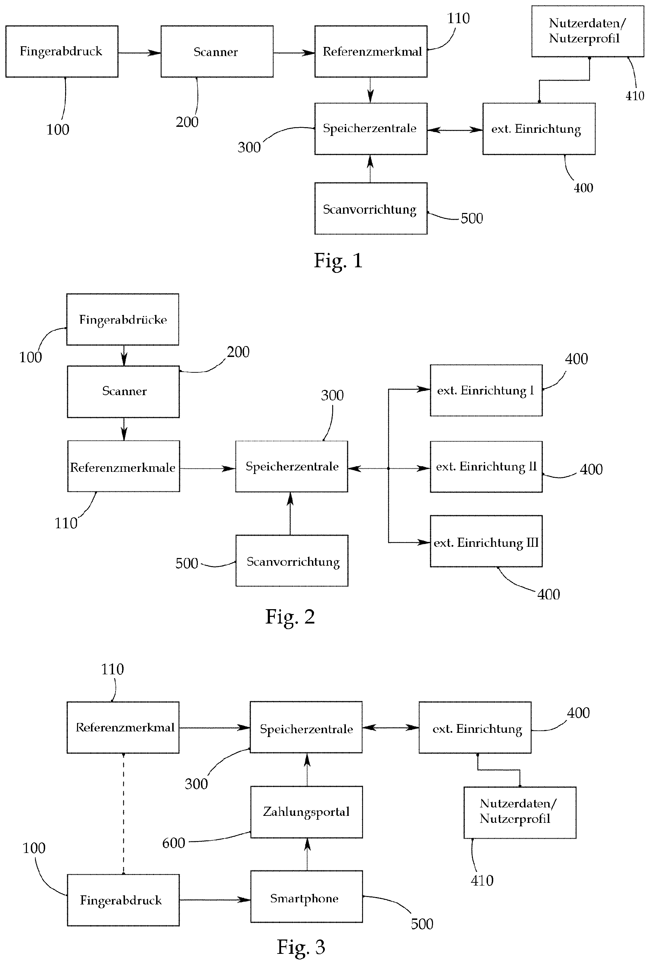

In **Fig. 1** ist ein Verfahren zur Überprüfung der Identität einer Person und Bereitstellung von damit verknüpften Nutzerdaten **410** schematisch dargestellt, wobei in einem ersten Schritt ein zur Überprüfung vorgesehener Datensatz der Person angelegt werden muss. Hierzu wird ein biometrisches Merkmal **100** in Form eines Fingerabdrucks der Person mittels eines dafür vorgesehenen Scanners **200** erfasst und zu einer Speicherzentrale **300** übermittelt, die das erfasste biometrische Merkmal **100** als biometrisches Referenzmerkmal **110** abgespeichert.

Anhand des einen biometrischen Merkmals **100,** in diesem Beispiel ein Fingerabdruck der Person, kann auch vorgesehen sein, dass ein Nutzerprofil der Person auf der Speicherzentrale **300** erstellt wird, wobei das erfasste biometrische Merkmal **100** als biometrisches Referenzmerkmal **110** mit diesem Nutzerprofil verknüpft und abgespeichert werden kann.

Die Speicherzentrale **300** kann beispielsweise ein Computer sein, der Zugriff auf ein oder mehrere externe Speichermedien besitzt.

Die genaue Ausführung zum Scannen und Speichern eines Fingerabdrucks ist dem Fachmann bereits bekannt und wird an dieser Stelle nicht näher erläutert.

Anschließend wird das in der Speicherzentrale **300** abgespeicherte Referenzmerkmal **110** mit dem Nutzerdatensatz **410** der Person einer externen Einrichtung **400** in Form einer bidirektionalen Verbindung verknüpft.

Unter einer externen Einrichtung **400** kann beispielsweise ein Bankinstitut, Versicherungsträger oder ähnliche Einrichtungen sein.

Zu einem späteren Zeitpunkt kann der zuvor als Referenzmerkmal **110** abgespeicherte Fingerabdruck **100** mit Hilfe einer Scanvorrichtung **500** erfasst werden, wobei entweder die Scanvorrichtung **500** oder ein zwischengeschalteter Computer, welcher nicht eingezeichnet ist, das Referenzmerkmal **110** aus der Speicherzentrale **300** ausliest und mit dem Fingerabdruck **100,** der mittels Scanvorrichtung **500** erfasst wurde, mit dem Referenzmerkmal **110** vergleicht.

Bei einer Übereinstimmung des Fingerabdrucks **100** mit dem dazu korrespondierenden Referenzmerkmal **100** wird der zuvor mit dem biometrischen Referenzmaterial **110** verknüpfte Nutzerdatensatz **410** der externen Einrichtung **400** abgerufen bzw. bereitgestellt und steht zur weiteren Verwendung zur Verfügung.

Der Vorgang des Erfassens des zuvor als Referenzmerkmal **110** abgespeicherten Fingerabdrucks **100** durch eine Scanvorrichtung **500** und des anschließenden Vergleichens kann beliebig oft wiederholt werden.

Überdies kann vorgesehen sein, dass beim Anlegen des zu überprüfenden Datensatzes der Person vor oder nach dem Scannen des biometrischen Merkmals **100** eine Bildaufnahme des Gesichts der Person mittels einer ersten Bildkamera, welche nicht in den Figuren eingezeichnet ist, erstellt wird und zusammen mit dem Referenzmerkmal **110** in der Speicherzentrale **300** abgelegt bzw. abgespeichert wird.

Ferner kann vorgesehen sein, dass eine Bildaufnahme des Scanvorgangs des biometrischen Merkmals **100** mittels einer zweiten Kamera erstellt wird und zusammen mit dem Referenzmerkmal **110** in der Speicherzentrale **300** abgelegt bzw. gespeichert wird, wobei bei der Aufnahme des Scanvorgangs sichergestellt werden sollte, dass das Gesicht der Person zu sehen ist.

Diese Vorgänge bringen das Referenzmerkmal **110** mit einer Gesichtsidentifikation der Person anhand der Bildaufnahmen in Verbindung, sodass als Sicherheitsmaßnahme jederzeit das durch die Scanvorrichtung **500** erfasste biometrische Merkmal **100** nicht nur mit dem Referenzmerkmal **110** abgeglichen werden kann, sondern auch die Person, deren biometrisches Merkmal **100** zu einem späteren Zeitpunkt durch die Scanvorrichtung **500** erfasst wird, zusätzlich anhand der gespeicherten Bildaufnahme und/oder Bildaufnahmen verifiziert werden kann.

Die Bildaufnahmen können auch mit dem zuvor erwähnten Nutzerprofil, welches in der Speicherzentrale mit dem Referenzmerkmal **110** abgespeichert ist, verknüpft und abgespeichert werden.

**Fig. 2** zeigt eine Erweiterung des Beispiels aus **Fig. 1****,** wobei mehrere Fingerabdrücke **100** mittels eines Scanners **200** erfasst und in einer Speicherzentrale **300** als zu den Fingerabdrücken korrespondierende Referenzmerkmale **110** abgespeichert werden.

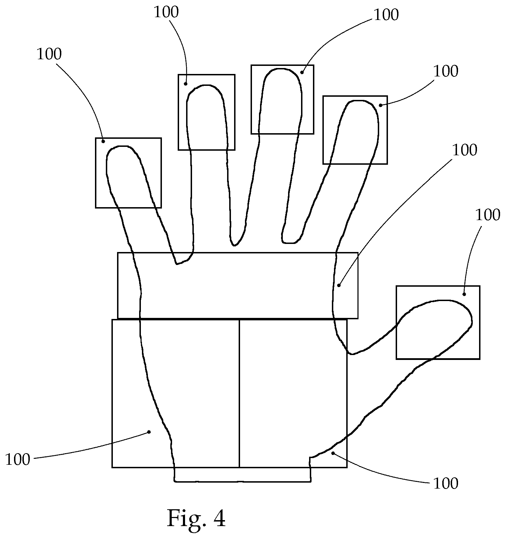

Es kann auch vorgesehen sein, dass eine und/oder beide Handflächen der Person mit Hilfe des Scanners **200** erfasst werden, wobei je Handfläche bis zu acht unterschiedliche biometrische Merkmale **100** erfasst werden, wie in **Fig. 4** an einer beispielhaften Handfläche gezeigt ist.

Die Referenzmerkmale **110** werden jeweils mit unterschiedlichen externen Einrichtungen **400** und deren jeweiligen Nutzerdatensätzen **410** der Person verknüpft.

So ist es beispielsweise möglich den Fingerabdruck **100** eines Zeigefingers und eines Mittelfingers der Person zu erfassen und als jeweilige Referenzmerkmale **110** abzuspeichern. Das Referenzmerkmal **110** des Zeigefingers kann dann beispielsweise mit dem Bankinstitut **400,** bei dem die Person ein Konto besitzt, verknüpft werden und/oder das Referenzmerkmal **110** des Mittelfingers kann beispielsweise mit dem Versicherungsträger der Person bzw. dessen Nutzerdaten verknüpft werden.

Dadurch ist den Fingerabdrücken **100** jeweils eine unterschiedliche externe Einrichtung **400** zugewiesen, wobei dessen mit der Person korrespondierender Nutzerdatensatz **410** durch eine Scanvorrichtung **500** abgerufen werden kann, je nachdem welcher Fingerabdruck **100** durch die Scanvorrichtung **500** erfasst wird und, wie bereits beschrieben, mit dem entsprechenden Referenzmerkmal **110** in der Speicherzentrale **300** verglichen und eine Übereinstimmung festgestellt wird.

Ein praxisnahes Beispiel ist hierzu in **Fig. 3** dargestellt. Ein Referenzmerkmal **110** einer Person ist nach dem bereits beschriebenen Vorgang in der Speicherzentrale **300** abgespeichert und mit einem mit der Person korrespondierenden Nutzerdatensatz **410**, eines Bankinstituts **400** verknüpft.

Die Person hat nun die Möglichkeit mit Hilfe eines Smartphones, welches als Scanvorrichtung **500** fungiert, über ein Zahlungsportal **600**, beispielsweise eine eigens dafür vorgesehen Applikation auf dem Smartphone, einen Kauf zu tätigen. Hierfür wird mittels dem Smartphone **500** der dem Referenzmerkmal **110** entsprechende Fingerabdruck **100** erfasst, wobei über eine Verbindung, beispielsweise Internet, das Referenzmerkmal **110** ausgelesen und mit dem Fingerabdruck **100** verglichen wird. Bei Übereinstimmung werden die Nutzerdatensätze **410** des zuvor verknüpften Bankinstituts **400** dem Zahlungsportal **600** zur Verfügung gestellt, um den Kauf abzuschließen.

Dies hat den Vorteil, dass keine Karte im Scheckkartenformat eines Bankinstituts benötigt wird, sodass lediglich der entsprechende Fingerabdruck **100** zur Durchführung finanzieller Transaktionen erforderlich ist.

## Patentansprüche

1. Verfahren zur Überprüfung der Identität einer Person und Bereitstellung von damit verknüpften Nutzerdaten, wobei zum Anlegen eines zur Überprüfung vorgesehenen Datensatzes einer Person folgende Schritte durchgeführt werden:
a) Erfassen zumindest eines biometrischen Merkmals (100) der Person mit Hilfe eines dafür vorgesehenen Scanners (200),
b) Speichern des aus Schritt a) erfassten biometrischen Merkmals (100) als biometrisches Referenzmerkmal (110) in einer Speicherzentrale (300), wobei
vor oder nach Schritt a) eine Bildaufnahme des Gesichts der Person mittels einer ersten Bildkamera erstellt wird und in Schritt b) zusammen mit dem Referenzmerkmal in der Speicherzentrale (300) abgelegt wird, und wobei
während Schritt a) zumindest eine Bildaufnahme des Vorgangs aus Schritt a) mittels einer zweiten Bildkamera erstellt wird und die zumindest eine Bildaufnahme in Schritt b) zusammen mit dem Referenzmerkmal (110) in der Speicherzentrale (300) abgelegt wird,
c) Verknüpfen des zumindest einen biometrischen Referenzmerkmals (110) mit einem Nutzerdatensatz (410) einer externen Einrichtung (400), beispielsweise eines Bankinstituts, und wobei zur Überprüfung der Identität der Person und Bereitstellung von damit verknüpften Nutzerdaten, folgende Schritte durchgeführt werden:
d) Erfassen des zumindest einen biometrischen Merkmals (100) mittels einer dafür vorgesehenen Scanvorrichtung (500), wobei die Scanvorrichtung (500) ein Smartphone ist, wobei die Scanvorrichtung (500) mit der Speicherzentrale (300) mittels einer Internetverbindung verbunden ist,
e) Auslesen des biometrischen Referenzmerkmals (110) aus der Speicherzentrale (300) und anschließendes Vergleichen des erfassten biometrischen Merkmals (100) aus Schritt d) mit dem biometrischen Referenzmerkmal (110), und
f) im Falle einer Übereinstimmung des Referenzmerkmals (110) mit dem aus Schritt d) erfassten biometrischen Merkmal (100), Abrufen und Bereitstellen des mit dem biometrischen Referenzmerkmal (110) verknüpften Nutzerdatensatzes (410) der externen Einrichtung (400).

2. Verfahren nach Anspruch 1, **dadurch gekennzeichnet, dass** zwei oder mehrere biometrische Merkmale (100) der Person erfasst werden und als Referenzmerkmale (110) abgespeichert werden, wobei die Referenzmerkmale (110) mit jeweils unterschiedlichen externen Einrichtungen (400), beispielsweise Bankinstitute, verknüpfbar sind.

3. Verfahren nach Anspruch 1 oder 2, **dadurch gekennzeichnet, dass** mehrere Bildaufnahmen, erstellt werden und die mehreren Bildaufnahmen in Schritt b) zusammen mit dem Referenzmerkmal (110) in der Speicherzentrale (300) abgelegt werden.

4. Verfahren nach einem der Ansprüche 1 bis 3, **dadurch gekennzeichnet, dass** das zumindest eine biometrische Merkmal (100) ein Fingerabdruck der Person ist.

5. Verfahren nach Anspruch 4, **dadurch gekennzeichnet, dass** in Schritt a) jeder an der Person vorhandene Fingerabdruck (100) erfasst wird.

6. Verfahren nach einem der Ansprüche 1 bis 4, **dadurch gekennzeichnet, dass** in Schritt a) beide Handflächen der Person, welche Handflächen jeweils bis zu acht unterschiedliche biometrische Merkmale (110) aufweisen, mit Hilfe des Scanners (200) erfasst werden.

## Claims

1. Method for verifying the identity of a person and providing user data associated therewith, wherein the following steps are carried out for creating a data record of a person intended for verification:
a) Capturing at least one biometric feature (100) of the person by means of a scanner (200) provided for this purpose,
b) Storing the biometric feature (100) captured in step a) as a biometric reference feature (110) in a storage centre (300), wherein before or after step a) an image recording of the person's face is produced by means of a first image camera and is stored in step b) together with the reference feature in the storage centre (300), and wherein during step a) at least one image recording of the process from step a) is produced by means of a second image camera and the at least one image recording is stored in step b) together with the reference feature (110) in the storage centre (300),
c) Linking the at least one biometric reference feature (110) with a user data record (410) of an external device (400), for example a banking institution, and wherein, in order to verify the identity of the person and provide user data linked thereto, the following steps are performed:
d) Capturing the at least one biometric feature (100) by means of a scanning device (500) provided therefor, wherein the scanning device (500) is a smartphone,
wherein the scanning device (500) is connected to the storage centre (300) by means of an internet connection,
e) Reading the biometric reference feature (110) from the storage centre (300) and subsequently comparing the captured biometric feature (100) from step d) with the biometric reference feature (110), and
f) In the event of a match of the reference feature (110) with the captured biometric feature (100) from step d), retrieving and providing to the external device (400) the user record (410) associated with the reference biometric feature (110).

2. Method according to claim 1, **characterised in that** two or more biometric features (100) of the person are recorded and stored as reference features (110), wherein the reference features (110) can be linked to different external devices (400), for example banking institutions.

3. Method according to claim 1 or 2, **characterised in that** a plurality of image recordings are produced and the plurality of image recordings are stored in step b) together with the reference feature (110) in the storage centre (300).

4. Method according to one of claims 1 to 3, **characterized in that** the at least one biometric feature (100) is a fingerprint of the person.

5. Method according to claim 4, **characterized in that** in step a) each fingerprint (100) present on the person is recorded.

6. A method according to any one of claims 1 to 4, **characterised in that** in step a) both palms of the person, which palms each have up to eight different biometric features (110), are captured by means of the scanner (200).

## Revendications

1. Procédé pour vérifier l'identité d'une personne et fournir des données d'utilisateur associées à celle-ci, dans lequel les étapes suivantes sont exécutées pour créer un enregistrement de données d'une personne destiné à la vérification :
a) Capturer au moins une caractéristique biométrique (100) de la personne au moyen d'un scanner (200) prévu à cet effet,
b) Stocker la caractéristique biométrique (100) acquise à l'étape a) en tant que caractéristique biométrique de référence (110) dans un fichier de données biométriques caractéristique de référence (110) dans un centre de stockage (300), dans lequel avant ou après l'étape a), un enregistrement d'image du visage de la personne est produit au moyen d'une première caméra d'image et est stocké à l'étape b) avec la caractéristique de référence dans l'unité centre de stockage (300), et dans lequel pendant l'étape a), au moins un enregistrement d'image de l'opération de l'étape a) est produit au moyen d'une deuxième caméra d'image et l'au moins un enregistrement d'image est stocké à l'étape b) conjointement avec la caractéristique de référence (110) dans la centre de stockage (300),
c) Lier la au moins une caractéristique de référence biométrique (110) à un enregistrement de données utilisateur (410), et enregistrement de données utilisateur (410) d'un dispositif externe (400), par exemple une institution bancaire, et dans lequel, afin de vérifier l'identité de la personne et de fournir les données utilisateur qui y sont liées, les étapes suivantes sont exécutées :
d) Capturer l'au moins une caractéristique biométrique (100) au moyen d'un dispositif de balayage (500) prévu à cet effet, moyennant quoi dispositif de balayage (500) prévu à cet effet, dans lequel le dispositif de balayage (500) est un smartphone, dans lequel le dispositif de balayage (500) est relié au centre de stockage (300) par l'intermédiaire d'une Connexion Internet,
e) Lire la caractéristique biométrique de référence (110) à partir de la centre de stockage (300) et ensuite comparer la caractéristique biométrique capturée (100) de l'étape d) avec la caractéristique biométrique de référence (110), et
f) En cas de correspondance de la caractéristique de référence (110) avec la caractéristique biométrique (100) capturée à l'étape d), récupérer et fournir au dispositif externe (400) l'enregistrement utilisateur (410) associé à la caractéristique biométrique de référence (110).

2. Procédé selon la revendication 1, **caractérisé en ce que** deux ou plusieurs caractéristiques biométriques (100) de la personne sont enregistrées et mémorisées comme caractéristiques de référence (110), les caractéristiques de référence (110) pouvant être reliées à chaque fois à différents dispositifs externes (400), par exemple des institutions bancaires.

3. Procédé selon la revendication 1 ou 2, **caractérisé en ce qu'**une pluralité de captures d'images sont créées et la pluralité de captures d'images sont stockées à l'étape b) avec la caractéristique de référence (110) dans le centre de stockage (300).

4. Procédé selon l'une quelconque des revendications 1 à 3, **caractérisé en ce que** l'au moins une caractéristique biométrique (100) est une empreinte digitale de la personne.

5. Procédé selon la revendication 4, **caractérisé en ce que**, à l'étape a), chaque empreinte digitale (100) présente sur l'écran d'affichage de l'ordinateur est analysée.
empreinte digitale (100) présente sur la personne.

6. Procédé selon l'une quelconque des revendications 1 à 4, **caractérisé en ce que** dans l'étape a) les deux paumes de la personne, lesquelles paumes comprennent chacune jusqu'à huit caractéristiques biométriques différentes (110), sont capturées au moyen du scanner (200).
